# EUROPÄISCHE PATENTSCHRIFT

(11) **EP 2 909 911 B1**
(45) Veröffentlichungstag und Bekanntmachung des Hinweises auf die Patenterteilung: **14.11.2018**
(21) Anmeldenummer: 13765301.0
(22) Anmeldetag: 09.09.2013
(51) Int. Cl.: H02J 3/14

(54) **VERFAHREN UND VORRICHTUNG ZUM ÜBERTRAGEN VON ELEKTRISCHER LEISTUNG**
METHOD AND APPARATUS FOR ELECTRICAL POWER TRANSFER
PROCEDE ET SYSTEME DE TRANSFERT DE PUISSANCE ELECTRIQUE

(30) Priorität: 17.10.2012 DE 102012218889
(43) Veröffentlichungstag der Anmeldung: 26.08.2015
(73) Patentinhaber: Robert Bosch GmbH, 70442 Stuttgart (DE)
(72) Erfinder: KRAUTER, Gisbert, 71737 Kirchberg (DE); FAYE, Ian, 70193 Stuttgart (DE); ECKERT, Bernd, 71665 Vaihingen An Der Enz (DE)
(86) Internationale Anmeldenummer: PCT/EP2013/068590
(87) Internationale Veröffentlichungsnummer: WO 2014/060147

(56) Entgegenhaltungen:
- WO-A1-2012/000538
- WO-A2-2010/108910
- WO-A2-2010/111451
- GB-A- 2 426 878
- US-A1- 2004 254 688

## Beschreibung

Die vorliegende Erfindung betrifft ein Verfahren zum Übertragen von elektrischer Leistung zwischen einem Energieversorgungsnetz und einem mit dem Energieversorgungsnetz gekoppelten Energieverbraucher oder Energieerzeuger.

Ferner betrifft die vorliegende Erfindung eine Vorrichtung zum Übertragen von elektrischer Leistung zwischen einem Energieversorgungsnetz und einem mit dem Energieversorgungsnetz gekoppeltenp Energieverbraucher oder Energieerzeuger.

### Stand der Technik

Auf dem Gebiet der Kraftfahrzeugantriebstechnik ist es allgemein bekannt, eine elektrische Maschine als alleinigen Antrieb oder gemeinsam mit einem Antriebsmotor eines anderen Typs (Hybridantrieb) zu verwenden. In derartigen Elektro- oder Hybridfahrzeugen werden typischerweise elektrische Drehfeldmaschinen als Antriebsmotor verwendet, die von einem an Bord des Kraftfahrzeugs befindlichen elektrischen Energiespeicher mit elektrischer Energie versorgt werden.

Bei einem Plug-In Hybridfahrzeug bzw. bei einem Elektrofahrzeug wird der elektrische Energiespeicher in bestimmten Zeitintervallen bzw. nach einer bestimmten Benutzungsdauer des Fahrzeugs mit einem Stromnetz eines Energieversorgers verbunden, um den elektrischen Energiespeicher mit elektrischer Energie zu laden.

Bei bekannten Ladesystemen für elektrisch angetriebene Kraftfahrzeuge erfolgt der Ladevorgang jedoch ohne Berücksichtigung der aktuellen Belastung des Versorgungsnetzes. So wird die entnommene Leistung selbst bei stark belasteten Versorgungsnetzen nicht reduziert. Werden gleichzeitig sehr viele Verbraucher an das Energieversorgungsnetz angeschlossen (z.B. viele Elektroautos), so kann dies zu einer Destabilisierung oder im Extremfall zu einem (Teil)-Ausfall des Energieversorgungsnetzes führen.

Um eine Entlastung und Stabilisierung eines stark belasteten Versorgungsnetzes zu erreichen, wird von den Energieversorgern daher eine Abschaltmöglichkeit für Ladegeräte bei Lastspitzen gefordert.

Dazu wird bei bekannten Energieübertragungssystemen bspw. die sogenannte Rundsteuertechnik eingesetzt. Bei der Rundsteuertechnik werden Steuerbefehle über das vorhandene Stromversorgungsnetz gesendet, um den Stromverbraucher entsprechend steuern zu können. Die Übertragung der Steuerbefehle erfolgt durch Impulsfolgen im Frequenzbereich von 110 Hz bis etwa 2000 Hz, die der Netzspannung mit einer Amplitude von ca. 1 % bis 4 % der jeweiligen Nennspannung überlagert werden. Dem Energieverbraucher ist ein spezieller Empfänger vorgeschaltet, der die Impulsfolgen wieder aus dem Versorgungsnetz ausfiltert und daraus die gewünschte Steuerinformation ableitet. Mit Hilfe der Steuerbefehle kann ein selektiver Lastabwurf von weniger wichtigen Netzlasten realisiert werden, um einen Zusammenbruch des Netzes bei starker Belastung zu verhindern.

Analog kann die Rundsteuertechnik auch für die Steuerung von kleineren Energieerzeugern, wie z.B. Photovoltaikanlagen, eingesetzt werden. Da die Erzeugung und der Verbrauch elektrischer Energie in einem elektrischen Energieverteilungsnetz jederzeit übereinstimmen sollten, wird die Einspeiseleistung von derartigen dezentralen Anlagen bei einem Überangebot von elektrischer Energie reduziert. In einer Überversorgungssituation wird demnach ein Einspeiseleistungsbegrenzungssignal an die dezentralen Energieerzeuger übertragen, um somit die eingespeiste Leistung stufenweise herabzusetzen. Zur Auswertung der Rundsteuersignale sind auch die dezentralen Energieerzeugungsanlagen mit entsprechenden Empfängern auszustatten.

Aus der DE 20 2009 018 108 ist ein Wechselrichter zur dezentralen Einspeisung von elektrischer Energie in ein öffentliches Wechselstromnetz bekannt. Der Wechselrichter weist einen Empfänger für ein zentral ausgesandtes Einspeiseleistungsbegrenzungssignal und eine Steuerung auf, die die Einspeiseleistung des Wechselrichters in Abhängigkeit des Einspeiseleistungsbegrenzungssignals auf ein vorgegebenes Maß begrenzt.

GB 2 426 878 A offenbart eine Steuervorrichtung für eine Lastverteilung zwischen Energieverbrauchern und Energieerzeugern in einem Energieversorgungsnetz. Als Steuerparameter kann eine Frequenz oder eine Spannungsamplitude vorgesehen sein.

WO 2010/108910 A2 offenbart ein Verfahren zum Betreiben einer Windenergieanlage. Solange der Wind oberhalb einer Anfangsgeschwindigkeit und unterhalb einer Abschaltgeschwindigkeit liegt, wird dabei elektrische Energie in ein Versorgungsnetz eingespeist.

WO 2012/000538 A1 offenbart ein netzlastabhängiges Ein-schalten von Endgeräten. Ein elektrisches Gerät kann hierzu eine Überwachungseinrichtung umfassen, die eine an dem elektrischen Gerät anliegende Spannung und/oder Frequenz überwacht.

US 2004/254688 A1 betrifft ein Verfahren zur Steuerung der Verteilung von elektrischer Energie sowie ein Verfahren zur Überwachung des Bedarfs an elektrischer Energie.

WO 2010/111451 A2 betrifft die Detektion des Unterschreitens einer Frequenz oder einer Spannung in einer Vorrichtung zur Bedarfssteuerung.

Nachteilig ist bei den bekannten Energieübertragungssystemen, dass spezielle Sender/Empfänger für die Erzeugung/Auswertung der Rundsteuersignale benötigt werden. Dies führt zu einer technisch aufwändigen Lösung und erfordert große Investitionen in die Informations- und Kommunikationstechnik.

### Offenbarung der Erfindung

Die vorliegende Erfindung stellt daher ein Verfahren und eine Vorrichtung zum Übertragen von elektrischer Leistung zwischen einem Energieversorgungsnetz und einem mit dem Energieversorgungsnetz gekoppelten Energieverbraucher oder Energieerzeuger mit den Merkmalen der unabhängigen Patentansprüche bereit.

### Vorteile der Erfindung

Bei der erfindungsgemäßen Vorrichtung bzw. bei dem erfindungsgemäßen Verfahren wird die Leistungsübertragung in Abhängigkeit einer ermittelten Abweichung der elektrischen Größe von der Nenngröße gesteuert. Die elektrische Größe kann direkt an dem Energieversorgungsnetz gemessen oder durch Beobachtung bzw. Berechnung aus anderen Größen ermittelt werden. Als elektrische Größe werden eine Netzfrequenz und eine Netzspannung des Energieversorgungsnetzes erfasst. Dabei kann in einer Ausführungsform primär die Netzfrequenz erfasst werden, da anhand dieser eine zuverlässige Aussage über die Gesamtbelastung des Energieversorgungsnetzes getroffen werden kann. Die gemessene Netzspannung wird zusätzlich zur Verifikation der auf Basis der Frequenzauswertung getroffenen Entscheidungen zusätzlich herangezogen.

Aufgrund der vorliegenden Erfindung kann auf eine komplexe und aufwändige Kommunikationsstruktur für die Steuerung der Leistungsübertragung verzichtet werden. Dies vereinfacht den Aufbau der Energieverbraucher/-erzeuger und führt damit zu einer kostengünstigeren Gesamtlösung.

Erfindungsgemäss wird ein Steuerbereich zwischen einem ersten und einem zweiten Schwellenwert der elektrischen Größe definiert, in dem die Leistungsübertragung auf der Grundlage der Abweichung der elektrischen Größe verändert wird, wobei die Nenngröße außerhalb des Steuerbereichs liegt.

Dabei wird ein Steuerbereich festgelegt, in dem die Leistungsübertragung an die aktuelle Netzauslastung angepasst wird. Weist die ermittelte elektrische Größe eine kleinere Abweichung auf als im Steuerbereich (d.h. die ermittelte Größe bewegt sich ungefähr in einem Bereich der Nenngröße), so wird die Leistungsübertragung bspw. unverändert fortgesetzt (z.B. kann der elektrische Energiespeicher des Elektrofahrzeugs in dieser Betriebssituation mit voller Leistung geladen werden).

In einer weiteren Ausführungsform wird die übertragene Leistung in dem Steuerbereich mit zunehmender Abweichung der elektrischen Größe von der Nenngröße kontinuierlich abgesenkt.

Bewegt sich die ermittelte elektrische Größe in dem Steuerbereich, so liegt je nach Betriebsart (Energieverbraucher/Energieerzeuger) entweder ein überlastetes oder ein überversorgtes Energieversorgungsnetz vor. Somit muss die Leistungsübertragung abgesenkt werden, um das Stromnetz zu stabilisieren. Die Absenkung erfolgt dabei kontinuierlich, um das Energieversorgungsnetz nicht durch ein z.B. plötzliches Abschalten vieler Ladegeräte zusätzlich zu destabilisieren.

Gemäß einer weiteren Ausführungsform wird die übertragene Leistung in dem Steuerbereich mit abnehmender Abweichung der elektrischen Größe von der Nenngröße kontinuierlich erhöht.

Sobald sich die elektrische Größe der Nenngröße annähert und sich das Stromnetz damit wieder stabilisiert, kann die übertragene Leistung angehoben werden. Auch dies erfolgt kontinuierlich, um bspw. einen Energieverbraucher möglichst schonend (z.B. entlang einer Rampenfunktion) in das Energieversorgungsnetz einzukoppeln.

Erfindungsgemäss wird die Leistungsübertragung bei Abweichungen der elektrischen Größe, die den Steuerbereich übersteigen, unterbrochen.

Weist die elektrische Größe eine größere Abweichung auf als im Steuerbereich, dann wird die Leistungsübertragung unterbrochen, um eine Stabilisierung des Stromnetzes zu ermöglichen.

In einer Ausführungsform kann die elektrische Größe im Steuerbereich derart abgesenkt werden, dass die Energieübertragung für die größte Abweichung im Steuerbereich unterbrochen ist. Mit anderen Worten wird die übertragene Leistung im Steuerbereich kontinuierlich bis auf den Wert 0 abgesenkt.

In einer alternativen Ausführungsform kann die übertragene Leistung bis auf einen vordefinierten Wert abgesenkt werden, der dann bspw. bei Abweichungen, die den Steuerbereich übersteigen, beibehalten wird.

Erfindungsgemäss wird ein zweiter Steuerbereich zwischen einem dritten und einem vierten Schwellenwert der elektrischen Größe definiert, in dem die Leistungsübertragung auf der Grundlage der elektrischen Größe verändert wird, wobei die Nenngröße zwischen dem zweiten Steuerbereich und dem ersten Steuerbereich liegt.

Dabei wird ein zweiter Steuerbereich festgelegt, in dem ebenfalls die Leistungsübertragung in Abhängigkeit der ermittelten Abweichung der elektrischen Größe von der Nenngröße angepasst wird. Allerdings handelt es sich hierbei um eine andere Betriebssituation als bei dem ersten Steuerbereich. Bei Anschluss eines Energieverbrauchers an das Energieversorgungsnetz wird durch den zweiten Steuerbereich bspw. eine Betriebssituation abgedeckt, in der ein überversorgtes Energieversorgungsnetz vorliegt. Wird eine derartige Überversorgung erkannt, so wird die Ladeleistung des Energieverbrauchers über einen Nennwert angehoben. Damit können bspw. höhere Einspeiseleistungen von dezentralen Energieerzeugungsanlagen ausgenutzt werden. Das Stromnetz wird in einem stabilen und ausgeglichenen Zustand gehalten.

In einer weiteren Ausführungsform wird die übertragene Leistung in dem zweiten Steuerbereich mit zunehmender Abweichung der elektrischen Größe von der Nenngröße kontinuierlich erhöht.

Die übertragene Leistung wird in dem zweiten Steuerbereich kontinuierlich erhöht, um z.B. keine Destabilisierung des Stromnetzes durch das plötzliche Hochfahren von mehreren elektrischen Lasten auf eine höhere Leistungsaufnahme zu bewirken. Dabei wird die übertragene Leistung vorteilhafterweise auf einen vordefinierten Maximalwert begrenzt.

Bei kleineren Abweichungen der elektrischen Größe, d.h. bei Abweichungen zwischen der Nenngröße und dem zweiten Steuerbereich, wird der Energieerzeuger/-verbraucher bspw. auf einem Nennwert der Leistungsübertragung betrieben.

In einer weiteren Ausführungsform wird die übertragene Leistung in dem zweiten Steuerbereich mit abnehmender Abweichung der elektrischen Größe von der Nenngröße kontinuierlich abgesenkt.

Sobald sich die elektrische Größe wieder der Nenngröße annähert, wird die übertragene Leistung kontinuierlich abgesenkt, um den stabilen/ausgeglichenen Zustand des Energieversorgungsnetzes in Bezug auf die Energiebilanz innerhalb des Stromnetzes beizubehalten.

Gemäß einer weiteren Ausführungsform werden die Schwellenwerte der elektrischen Größe auf der Grundlage der Nenngröße festgelegt.

Die Schwellenwerte für den ersten und den zweiten Steuerbereich werden in Abhängigkeit der ermittelten Nenngröße (z.B. 50 Hz/60 Hz Versorgungsnetz) und der Betriebsart (Energieerzeuger/Energieverbraucher) eingestellt. Damit kann die Steuerung der Leistungsübertragung präzise auf die aktuelle Betriebssituation angepasst werden.

In einer weiteren Ausführungsform wird die Nenngröße auf der Grundlage der erfassten elektrischen Größe bestimmt.

Beispielsweise kann ein an das Energieversorgungsnetz angeschlossenes Ladegerät mittels einer Frequenzmessung selbsttätig erkennen, ob das Ladegerät an einem 50 Hz oder an einem 60 Hz Netz betrieben wird. Abhängig davon werden die Nenngröße und die entsprechenden Schwellenwerte festgelegt. Damit ist keine manuelle Konfiguration des Energieerzeugers/-verbrauchers notwendig. Eventuelle Fehlkonfigurationen können ausgeschlossen werden. Dadurch wird eine sehr einfache Handhabung der Energieerzeuger/-verbraucher ermöglicht.

In einer weiteren Ausführungsform wird die Leistung von dem Energieversorgungsnetz zu dem Energieverbraucher übertragen und der erste Steuerbereich wird unterhalb der Nenngröße definiert.

Durch diese Maßnahme wird z.B. bei einem Abfall der Netzfrequenz eine Überlastung des Energieversorgungsnetzes erkannt. Demzufolge wird die von dem Ladegerät aufgenommene Leistung kontinuierlich reduziert, um der Überlastung entgegenzuwirken.

Der zweite Steuerbereich wird in dieser Betriebsart oberhalb der Nenngröße festgelegt. Somit kann das Ladegerät z.B. bei einem Überangebot von elektrischer Energie mehr Leistung aufnehmen und damit das Gleichgewicht von erzeugter und verbrauchter elektrischer Energie innerhalb des Energieversorgungsnetzes wiederherstellen.

In einer weiteren Ausführungsform wird die Leistung von dem Energieerzeuger zu dem Energieversorgungsnetz übertragen und der erste Steuerbereich wird oberhalb der Nenngröße definiert.

Als Energieerzeuger kann z.B. eine Photovoltaikanlage bzw. ein einspeisender Wechselrichter verwendet werden. Aus einer erhöhten Netzfrequenz und/oder Netzspannung wird in dieser Ausführungsform abgeleitet, dass eine Überversorgung in dem Stromnetz vorliegt. Entsprechend wird die eingespeiste Leistung in Abhängigkeit der Werte von Netzfrequenz und/oder Netzspannung von dem Energieerzeuger kontinuierlich reduziert.

In einer weiteren Ausführungsform wird das Steuern der Leistungsübertragung auf der Grundlage einer Betriebsbedingung der Leistungsübertragung abgeschaltet.

Wird bspw. ein Energieverbraucher in einem Inselnetz (z.B. Dieselgenerator, Windkraft etc.) betrieben, so kann die Leistungsreduktion des Energieverbrauchers abgeschaltet werden, um ein Schwingen mit der Frequenzregelung des Generators zu vermeiden.

Inselnetze aufgrund eines Notstrombetriebes (Netzersatzanlagen) werden üblicherweise bei einer von der Nennfrequenz deutlich abweichenden Frequenz (z.B. 47Hz) betrieben, um sicherzustellen, dass Energieerzeuger (wie z.B. Photovoltaikanlagen) abgeschaltet bleiben. Damit kann der Energieverbraucher alternativ in einen definierten Netzersatz-Betrieb mit vordefinierten Parametern geschaltet werden, sofern die Abweichung der Netzfrequenz einen weiteren Schwellenwert überschreitet.

In einer besonders bevorzugten Ausführungsform der Vorrichtung ist ein Steuerbereich zwischen einem ersten und einem zweiten Schwellenwert der elektrischen Größe definiert, wobei die Nenngröße außerhalb des Steuerbereichs liegt und wobei die Steuereinheit dazu ausgebildet ist, die übertragene Leistung in dem Steuerbereich mit zunehmender Abweichung der elektrischen Größe von der Nenngröße kontinuierlich abzusenken.

Durch diese Maßnahme können die Energieverbraucher/-erzeuger selbsttätig auf die aktuelle Auslastungssituation in dem Energieversorgungsnetz reagieren. Aufwändige bzw. kostenintensive Investitionen in die Informations- und Kommunikationsstruktur des Energieversorgungsnetzes können vermieden werden. Des Weiteren ist die erfindungsgemäße Steuerung der Leistungsübertragung in den bereits vorhandenen Energieversorgungsnetzen einsetzbar, da lediglich elektrische Größen an dem Netzanschluss des Energieverbrauchers/-erzeugers erfasst werden müssen. Somit kann mit sehr einfachen Mitteln (z.B. einer neuen Software in einem Ladegerät) eine hocheffiziente Netzentlastung bei Lastspitzen in dem Energieversorgungsnetz erreicht werden.

Es versteht sich, dass die Merkmale, Eigenschaften und Vorteile des erfindungsgemäßen Verfahrens auch entsprechend auf die erfindungsgemäße Vorrichtung zutreffen bzw. anwendbar sind.

### Kurze Beschreibung der Zeichnungen

Fig. 1 zeigt in schematischer Ansicht eine Vorrichtung zum Übertragen von elektrischer Leistung zwischen einem Energieversorgungsnetz und einem mit dem Energieversorgungsnetz gekoppelten Energieverbraucher/Energieerzeuger;
Fig. 2 zeigt ein Diagramm zur Darstellung einer Leistungskennlinie des Energieverbrauchers in Abhängigkeit einer Netzfrequenz des Energieversorgungsnetzes;
Fig. 3 zeigt ein Diagramm zur Darstellung einer Leistungskennlinie des Energieerzeugers in Abhängigkeit der Netzfrequenz des Energieversorgungsnetzes; und
Fig. 4 zeigt ein Diagramm zur Erläuterung einer Ausführungsform eines erfindungsgemäßen Verfahrens.

### Ausführungsformen der Erfindung

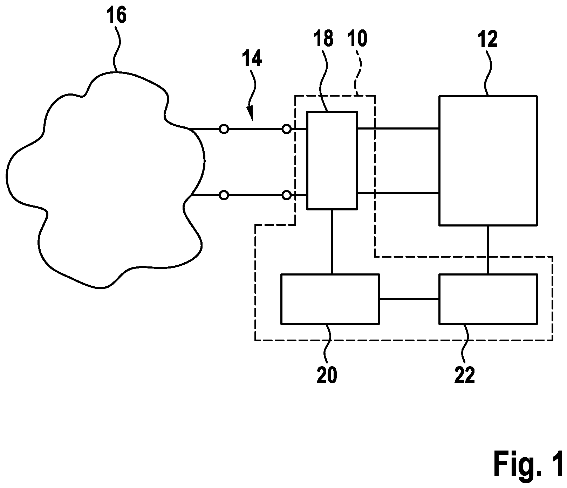

Fig. 1 zeigt in schematischer Ansicht eine Vorrichtung 10 zum Übertragen von elektrischer Leistung zwischen einem Energieverbraucher/Energieerzeuger 12, der an ein Niederspannungsnetz 14 angeschlossen ist, und einem Energieversorgungsnetz 16. Unter dem Niederspannungsnetz 14 wird vorliegend ein Teil des Energieversorgungsnetzes 16 verstanden, der zur Verteilung der elektrischen Energie an die elektrischen Endverbraucher dient. In Mitteleuropa wird ein Niederspannungsnetz üblicherweise mit Spannungen zwischen 230 V/400 V (einphasig/dreiphasig) bis zu 1000 V betrieben. Um Spannungsverluste zu vermeiden, sind Niederspannungsnetze in der räumlichen Ausdehnung auf einen Bereich von einigen einhundert Metern bis zu einigen wenigen Kilometern beschränkt. Daher werden die regionalen Niederspannungsnetze über Transformatorenstationen aus einem übergeordneten Mittelspannungsnetz gespeist.

Die Vorrichtung 10 dient dazu, die Leistungsübertragung zwischen dem Energieverbraucher/Energieerzeuger 12 und dem Energieversorgungsnetz 16 an die aktuelle Auslastungssituation des Energieversorgungsnetzes 16 anzupassen. Dazu weist die Vorrichtung 10 eine Erfassungseinheit 18 auf, mittels der wenigstens eine elektrische Größe des Niederspannungsnetzes 14 erfasst wird. Als elektrische Größe kann bspw. eine Netzfrequenz und/oder eine Netzspannung der Niederspannungsnetzes 14 ermittelt werden.

Darüber hinaus weist die Vorrichtung 10 eine Auswerteeinheit 20 und eine Steuereinheit 22 auf. Die erfasste Netzfrequenz und/oder Netzspannung des Niederspannungsnetzes 14 werden zur Auswertung der Auslastungssituation des Energieversorgungsnetzes 16 an die Auswerteeinheit 20 weitergeleitet. So ist bspw. die Netzfrequenz ein zuverlässiger Indikator für die Belastung des Energieversorgungsnetzes 16. Bei einem überlasteten Energieversorgungsnetz 16 sinkt die Netzfrequenz unter eine Nennfrequenz des Energieversorgungsnetzes 16. Parallel sinkt bei einer hohen Belastung des Energieversorgungsnetzes 16 auch die Netzspannung. Somit kann die Netzspannung bspw. zur Verifikation der auf Basis der Frequenzauswertung getroffenen Entscheidungen zusätzlich herangezogen werden. Die Auswerteeinheit 20 ermittelt die Abweichungen der elektrischen Größen von den entsprechenden Nenngrößen und leitet diese ggf. an die Steuereinheit 22 weiter. Die Steuereinheit 22 ist dazu ausgebildet, die Leistungsübertragung zwischen dem Energieverbraucher/Energieerzeuger 12 und dem Energieversorgungsnetz 16 auf der Grundlage der Abweichungen zu steuern bzw. zu verändern. Damit kann die Leistungsübertragung an eine Überversorgung oder eine Überlastung des Energieversorgungsnetzes 16 angepasst werden, ohne dass dafür eine aufwändige Informations- und Kommunikationsstruktur eingesetzt werden muss. Die übertragene Leistung wird lediglich in Abhängigkeit einer Auswertung von elektrischen Größen des Netzanschlusses eingestellt. Infolge dessen wird die Komplexität des Gesamtsystems reduziert.

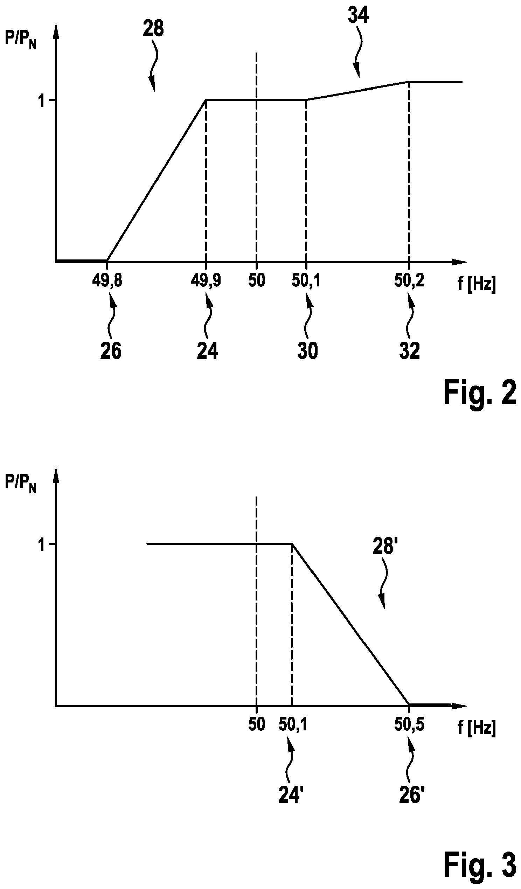

Die Steuerung der Leistungsübertragung soll im Folgenden anhand der Figuren 2 und 3 näher erläutert werden. Dazu ist auf der jeweiligen Abszisse der Figuren 2 und 3 die Netzfrequenz des Niederspannungsnetzes 14 in der Einheit Hertz aufgetragen. Die jeweilige Ordinate kennzeichnet die übertragene Leistung, die auf einen Nennwert der übertragenen Leistung normiert ist, wobei sich der Nennwert auf den jeweils angeschlossenen Energieverbraucher/Energieerzeuger 12 bezieht. Dabei illustriert die Fig. 2 einen beispielhaften Verlauf der übertragenen Leistung für den Fall, dass der Energieverbraucher 12 an das Energieversorgungsnetz 16 angeschlossen ist. Analog zeigt Fig. 3 den Leistungsverlauf für den angeschlossenen Energieerzeuger 12, der Leistung in das Energieversorgungsnetz 16 einspeist. In beiden Fällen (Fig. 2 - Energieverbraucher 12, Fig. 3 - Energieerzeuger 12) soll angenommen werden, dass das Energieversorgungsnetz 16 bzw. das Niederspannungsnetz 14 zunächst auf einer Nennfrequenz von 50 Hz betrieben wird.

Im Folgenden soll zuerst die Leistungskennlinie zur Steuerung des Energieverbrauchers 12 aus Fig. 2 näher erläutert werden. In dem vorliegenden Fall ist der Energieverbraucher 12 bspw. ein Ladegerät 12, das mit einer Traktionsbatterie eines elektrisch betriebenen Kraftfahrzeugs gekoppelt ist. Zur Steuerung der Ladeleistung für die Traktionsbatterie 12 werden ein erster Schwellenwert 24 bei der Frequenz 49,9 Hz und ein zweiter Schwellenwert 26 bei der Frequenz 49,8 Hz definiert. Der Bereich zwischen diesen beiden Schwellenwerten 24, 26 bildet einen ersten Steuerbereich 28 für die übertragene Ladeleistung.

In dem vorliegenden Beispiel wird mittels der Erfassungseinheit 18 die Netzfrequenz des Niederspannungsnetzes 14 bzw. des Energieversorgungsnetzes 16 erfasst. Weist die Netzfrequenz kleinere Werte als 50 Hz auf, so liegt ein überlastetes Energieversorgungsnetz 16 vor. Dagegen ist das Energieversorgungsnetz 16 überversorgt, falls die Netzfrequenz größer als 50 Hz ist. Zur Auswertung der gemessenen Netzfrequenz wird diese an die Auswerteeinheit 20 weitergeleitet. Die Auswerteeinheit 20 vergleicht die gemessene Netzfrequenz mit den Schwellenwerten 24, 26. Bewegt sich die ermittelte Netzfrequenz in einem Bereich zwischen der Nenngröße (50 Hz) und dem ersten Schwellenwert (49,9 Hz), so wird die Traktionsbatterie mit der Nennleistung weitergeladen. Liegt die Netzfrequenz jedoch in dem ersten Steuerbereich 28, dann wird die ermittelte Abweichung der Netzfrequenz an die Steuereinheit 22 weitergeleitet. Die Steuereinheit 22 steuert das Ladegerät 12 derart, dass die Ladeleistung mit zunehmender Abweichung der Netzfrequenz von der Nennfrequenz kontinuierlich abgesenkt wird. Vorteilhafterweise wird die Ladeleistung so abgesenkt, dass sie bei dem zweiten Schwellenwert 26 bis auf den Wert 0 reduziert wird. Damit wird die Leistungsübertragung zu der Traktionsbatterie für Abweichungen der Netzfrequenz, die den zweiten Schwellenwert 26 übersteigen, unterbrochen. Mit Hilfe der kontinuierlichen Reduktion der Leistung in dem Steuerbereich 28 wird eine sanfte Entlastung des Energieversorgungsnetzes 16 erreicht, ohne dass Instabilitäten in dem Energieversorgungsnetz 16 erzeugt werden.

Damit kann das Ladegerät 12 selbsttätig auf Lastspitzen im Energieversorgungsnetz 16 mit einer Reduzierung der Leistung reagieren. Aufwändige Investitionen in die Informations- und Kommunikationsstruktur werden vermieden.

Alternativ besteht auch die Möglichkeit, dass das Ladegerät 12 Leistung von der Traktionsbatterie in das Energieversorgungsnetz 16 einspeist, sofern ein überlastetes Energieversorgungsnetz 16 vorliegt. Dazu ist es erforderlich, dass das Ladegerät 12 über eine Einspeisevorrichtung verfügt.

Wird eine Netzfrequenz ermittelt, die einen größeren Wert aufweist als die Nennfrequenz, so deutet dies auf ein überversorgtes Energieversorgungsnetz 16 hin. Zur Steuerung der Leistungsübertragung bei einem überversorgten Energieversorgungsnetz 16 werden ein dritter Schwellenwert 30 und ein vierter Schwellenwert 32 festgelegt, die einen zweiten Steuerbereich 34 definieren. Bei einer gemessenen Netzfrequenz zwischen der Nennfrequenz (50 Hz) und dem dritten Schwellenwert 30 (50,1 Hz), wird die Batterie mit der Nennleistung weitergeladen. Bewegt sich die erfasste Netzfrequenz jedoch in dem zweiten Steuerbereich 34, so wird die ermittelte Abweichung an die Steuereinheit 22 weitergeleitet. Die Steuereinheit 22 steuert das Ladegerät 12 derart, dass die Ladeleistung mit zunehmender Abweichung der Netzfrequenz von der Nennfrequenz kontinuierlich erhöht wird. Mit dieser Anhebung der Leistungsentnahme kann einer Überversorgung in dem Energieversorgungsnetz 16 entgegengewirkt werden. Beispielsweise können Solaranlagen, die Energie in das Energieversorgungsnetz 16 einspeisen, in einer Zeit von intensiver Sonneneinstrahlung eine derartige Überversorgung in dem Energieversorgungsnetz 16 auslösen. Diese bewirkt einen Anstieg der Netzspannung und der Netzfrequenz. Durch das Erhöhen der Ladeleistung kann das Gleichgewicht zwischen eingespeister und entnommener Leistung in dem Energieversorgungsnetz 16 wiederhergestellt werden.

Bei Annährung der ermittelten Netzfrequenz an die Nennfrequenz von 50 Hz, wird die übertragene Leistung kontinuierlich wieder auf die Nennleistung erhöht (erster Steuerbereich 28) bzw. abgesenkt (zweiter Steuerbereich 34).

Bei dem zuvor beschriebenen Ausführungsbeispiel wird die Steuerung der Ladeleistung alleine auf Basis der erfassten Netzfrequenz ausgeführt. Zusätzlich kann jedoch auch die Netzspannung des Niederspannungsnetzes 14 erfasst werden, um die anhand der Netzfrequenz bestimmte Ladeleistungseinstellung zu verifizieren. In einer alternativen Ausführungsform kann auch lediglich die Netzspannung des Niederspannungsnetzes 14 erfasst und anhand dieser die Ladeleistung des Ladegeräts 12 gesteuert werden. Dazu werden analog zu dem oben beschriebenen Ausführungsbeispiel mehrere Spannungsschwellenwerte festgelegt, die einen entsprechenden ersten und zweiten Steuerbereich definieren. Dabei wird die übertragene Leistung ebenfalls kontinuierlich angepasst, um negative Netzrückwirkungen, z.B. infolge eines schlagartigen Abschaltens des Ladegeräts 12 zu vermeiden.

Die Einstellung der übertragenen Leistung erfolgt vorteilhafterweise mit einer trägen Regelung, um unbeabsichtigte Aufschwingeffekte zu unterdrücken.

Das zu Fig. 2 beschriebene Prinzip zur Leistungssteuerung kann analog auf einen Energieerzeuger 12, im vorliegenden Fall auf einen einspeisenden Wechselrichter 12, angewendet werden. Die entsprechende Leistungskennlinie ist in Fig. 3 dargestellt. Da in dieser Betriebsart Leistung in das Energieversorgungsnetz 16 eingespeist wird, wird der erste Steuerbereich 28' in einem Bereich oberhalb der Netzfrequenz 50 Hz zwischen dem ersten Schwellenwert 24' (50,1 Hz) und dem zweiten Schwellenwert 26' (50,5 Hz) definiert.

Bei Netzfrequenzen unterhalb des ersten Schwellenwerts 24' speist der Wechselrichter 12 eine Nennleistung in das Energieversorgungsnetz 16 ein. Sobald die Auswerteeinheit 20 eine Abweichung der Netzfrequenz in dem ersten Steuerbereich 28' erkennt, wird diese an die Steuereinheit 22 weitergeleitet. Die Steuereinheit 22 steuert den Wechselrichter 12 derart, dass die eingespeiste Leistung mit zunehmender Abweichung der Netzfrequenz von der Nennfrequenz kontinuierlich entsprechend der in Fig. 3 beispielhaft dargestellten Leistungskennlinie bis auf den Wert 0 abgesenkt wird. Bei Abweichungen, die den zweiten Schwellenwert übersteigen, wird das Einspeisen von Leistung mittels des Wechselrichters 12 unterbrochen. Damit kann der Überversorgung in dem Energieversorgungsnetz 16 entgegengewirkt werden.

In einer alternativen Ausführungsform kann die Leistung bei Erreichen des zweiten Schwellenwerts 26' auch auf einen Wert ungleich 0 abgesenkt werden. Jedoch sollte dieser Wert so gewählt werden, dass die Überversorgung in dem Energieversorgungsnetz 16 wirksam reduziert werden kann.

Analog zu dem Ausführungsbeispiel aus Fig. 2 wird die eingespeiste Leistung des Wechselrichters 12 kontinuierlich verändert, um eine Destabilisierung und/oder Aufschwingeffekte in dem Energieversorgungsnetz 16 zu vermeiden.

Darüber hinaus kann zur Steuerung der eingespeisten Leistung des Wechselrichters 12 zusätzlich oder alternativ die Netzspannung ausgewertet werden.

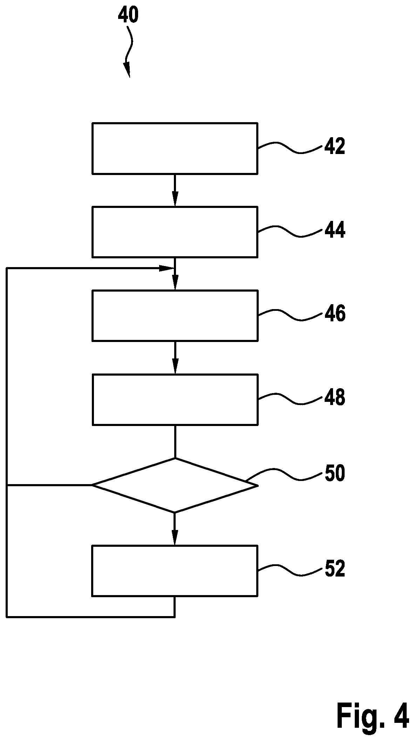

Fig. 4 zeigt ein Diagramm zur Erläuterung einer Ausführungsform eines erfindungsgemäßen Verfahrens 40. Insbesondere dient das Verfahren 40 zum Steuern der Leistungsübertragung zwischen dem Energieversorgungsnetz 16 und dem mit dem Energieversorgungsnetz 16 gekoppelten Energieverbraucher/Energieerzeuger 12. Für die Erläuterung des Verfahrens 40 soll wiederum angenommen werden, dass das Ladegerät 12 an das Energieversorgungsnetz 16 gekoppelt ist.

In einem Schritt 42 wird zunächst die Netzfrequenz des Niederspannungsnetzes 14 erfasst. Aus dieser Netzfrequenz erkennt das Ladegerät 12 selbsttätig, ob das Ladegerät 12 bspw. an einem Netz mit einer Nennfrequenz von 50 Hz oder mit 60 Hz betrieben wird. Nach der Ermittlung der Nennfrequenz des Niederspannungsnetzes 14 werden in einem Schritt 44 die Schwellenwerte 24, 26, 30, 32 in Abhängigkeit der Nennfrequenz festgelegt. Damit sind auch die Steuerbereiche 28, 34 definiert.

Anschließend werden in einem Schritt 46 die Netzfrequenz und/oder die Netzspannung des Niederspannungsnetzes 14 erfasst. Für die weitere Beschreibung des Verfahrens 40 soll angenommen werden, dass die Netzfrequenz die primäre Größe für die Leistungssteuerung bildet und dass die Netzspannung lediglich zur Verifikation eingesetzt wird. Alternativ kann jedoch die Steuerung der übertragenen Leistung auch nur auf Basis der Netzfrequenz oder auch nur auf Basis der Netzspannung erfolgen.

In einem Schritt 48 wird die Abweichung der Netzfrequenz von der Nennfrequenz ermittelt.

In einem Schritt 50 wird anschließend geprüft, ob diese Abweichung der Netzfrequenz innerhalb des ersten Steuerbereichs 28 oder des zweiten Steuerbereichs 34 liegt. Falls dies nicht der Fall ist, wird das Erfassen der Netzfrequenz und/oder der Netzspannung in dem Schritt 46 fortgesetzt. Die übertragene Leistung wird nicht verändert.

Falls die Abweichung jedoch in einem der Steuerbereiche 28, 34 liegt, so wird in einem Schritt 52 die anhand der Netzfrequenz ermittelte Betriebssituation (überlastetes Netz/überversorgtes Netz) mit Hilfe der gemessenen Netzspannung verifiziert. Ist die Verifikation positiv (d.h. bspw. wird bei einer geringeren Netzfrequenz auch eine geringere Netzspannung gemessen), dann wird die Ladeleistung des Ladegeräts 12 entsprechend der Leistungskennlinie angepasst. Bei einer negativen Verifikation sind mehrere Möglichkeiten denkbar. Beispielsweise kann bei einer negativen Verifikation eine andere Leistungskennlinie verwendet werden als bei einer positiven Verifikation. Alternativ kann die negative Verifikation auch nur zu statistischen Zwecken ausgewertet werden. Die Leistung des Ladegeräts 12 wird dann unabhängig von der Verifikation eingestellt. In einer weiteren alternativen Ausführungsform kann eine negative Verifikation dazu führen, dass die übertragene Leistung unverändert aufrechterhalten wird.

Das erfindungsgemäße Verfahren 40 bzw. die erfindungsgemäße Vorrichtung 10 können bspw. in Elektrofahrzeugen oder Plug-In Hybridfahrzeugen eingesetzt werden, die mit Ladegeräten an Wechselspannungsnetzen nachgeladen werden. Außerdem kann die vorgeschlagene Leistungssteuerung auch bei allen anderen stationären Stromverbrauchern eingesetzt werden, bei denen keine kontinuierliche Leistungsentnahme erforderlich ist. Als Beispiel für derartige Stromverbraucher können stationäre Batteriepacks, Notstromversorgungen, Backöfen, Umwälzpumpen etc. angeführt werden. Für den Fall, dass Energie in das Energieversorgungsnetz 16 eingespeist wird, kann die erfindungsgemäße Lösung bspw. bei Photovoltaikwechselrichtern oder Windkraftwechselrichtern eingesetzt werden.

Aufgrund der Auswertung von elektrischen Größen des Netzanschlusses müssen die verschiedenen Energieverbraucher/Energieerzeuger nicht mit aufwändiger Kommunikationstechnik ausgestattet werden, um die übertragene Leistung an die Auslastungssituation des Energieversorgungsnetzes anzupassen.

## Patentansprüche

1. Verfahren (40) zum Übertragen von elektrischer Leistung zwischen einem Energieversorgungsnetz (16) und einem mit dem Energieversorgungsnetz (16) gekoppelten Energieverbraucher (12) oder Energieerzeuger (12), mit den Schritten:
- Erfassen wenigstens einer elektrischen Größe des Energieversorgungsnetzes (16),
- Ermitteln einer Abweichung der elektrischen Größe von einer der elektrischen Größe zugeordneten Nenngröße des Energieversorgungsnetzes (16), und
- Steuern der Leistungsübertragung auf der Grundlage der Abweichung,
wobei die elektrische Größe eine Netzfrequenz des Energieversorgungsnetzes (16) und die Nenngröße eine Nennfrequenz des Energieversorgungsnetzes (16) ist, wobei ein erster Steuerbereich (28) zwischen einem ersten und einem zweiten Schwellenwert (24, 26) der elektrischen Größe definiert wird, in dem die Leistungsübertragung auf der Grundlage der Abweichung der elektrischen Größe verändert wird, wobei die Nenngröße außerhalb des ersten Steuerbereichs (28) liegt, und ein zweiter Steuerbereich (34) zwischen einem dritten und einem vierten Schwellenwert (30, 32) der elektrischen Größe definiert wird, in dem die Leistungsübertragung auf der Grundlage der elektrischen Größe verändert wird, wobei die Nenngröße zwischen dem zweiten Steuerbereich (34) und dem ersten Steuerbereich (28) liegt,
**dadurch gekennzeichnet, dass**
- durch die Netzfrequenz relativ zur Nennfrequenz ermittelt wird, ob das Energieversorgungsnetz (16) überversorgt ist oder überlastet ist, und mit der Netzfrequenz im zweiten Steuerbereich (34) ein überversorgtes und mit der Netzfrequenz im ersten Steuerbereich (28) ein überlastetes Energieversorgungsnetz (16) angenommen wird; und
- die Leistungsübertragung bei Abweichungen der elektrischen Größe, die den ersten und/oder zweiten Steuerbereich (28, 34) übersteigen, unterbrochen wird, wobei die auf Basis der Netzfrequenz getroffene Entscheidung mit Hilfe einer gemessenen Netzspannung verifiziert wird.

2. Verfahren nach Anspruch 1, wobei die übertragene Leistung in dem Steuerbereich (28) mit zunehmender Abweichung der elektrischen Größe von der Nenngröße kontinuierlich abgesenkt wird.

3. Verfahren nach Anspruch 1 oder 2, wobei die übertragene Leistung in dem Steuerbereich (28) mit abnehmender Abweichung der elektrischen Größe von der Nenngröße kontinuierlich erhöht wird.

4. Verfahren nach einem der Ansprüche 1 bis 3, wobei die übertragene Leistung in dem zweiten Steuerbereich (34) mit zunehmender Abweichung der elektrischen Größe von der Nenngröße kontinuierlich erhöht wird.

5. Verfahren nach einem der Ansprüche 1 bis 4, wobei die übertragene Leistung in dem zweiten Steuerbereich (34) mit abnehmender Abweichung der elektrischen Größe von der Nenngröße kontinuierlich abgesenkt wird.

6. Verfahren nach einem der Ansprüche 1 bis5, wobei die Schwellenwerte der elektrischen Größe (24, 26, 30, 32) auf der Grundlage der Nenngröße festgelegt werden.

7. Verfahren nach einem der Ansprüche 1 bis 6, wobei die Nenngröße auf der Grundlage der erfassten elektrischen Größe bestimmt wird.

8. Verfahren nach einem der Ansprüche 1 bis 7, wobei die Leistung von dem Energieversorgungsnetz (16) zu dem Energieverbraucher (12) übertragen wird und wobei der erste Steuerbereich (28) unterhalb der Nenngröße definiert wird.

9. Verfahren nach einem der Ansprüche 1 bis 7, wobei die Leistung von dem Energieerzeuger (12) zu dem Energieversorgungsnetz (16) übertragen wird und wobei der erste Steuerbereich (28') oberhalb der Nenngröße definiert wird.

10. Vorrichtung (10) zum Übertragen von elektrischer Leistung zwischen einem Energieversorgungsnetz (16) und einem mit dem Energieversorgungsnetz (16) gekoppelten Energieverbraucher (12) oder Energieerzeuger (12), mit:
- einer Erfassungseinheit (18) zum Erfassen wenigstens einer elektrischen Größe des Energieversorgungsnetzes (16),
- einer Auswerteeinheit (20) zum Ermitteln einer Abweichung der elektrischen Größe von einer der elektrischen Größe zugeordneten Nenngröße des Energieversorgungsnetzes (16), und
- einer Steuereinheit (22), die dazu ausgebildet ist, die Leistungsübertragung auf der Grundlage der Abweichung zu steuern,
wobei die elektrische Größe eine Netzfrequenz des Energieversorgungsnetzes (16) und die Nenngröße eine Nennfrequenz des Energieversorgungsnetzes (16) ist, wobei ein erster Steuerbereich (28) zwischen einem ersten und einem zweiten Schwellenwert (24, 26) der elektrischen Größe definiert wird, in dem die Leistungsübertragung auf der Grundlage der Abweichung der elektrischen Größe verändert wird, wobei die Nenngröße außerhalb des ersten Steuerbereichs (28) liegt, und ein zweiter Steuerbereich (34) zwischen einem dritten und einem vierten Schwellenwert (30, 32) der elektrischen Größe definiert wird, in dem die Leistungsübertragung auf der Grundlage der elektrischen Größe verändert wird, wobei die Nenngröße zwischen dem zweiten Steuerbereich (34) und dem ersten Steuerbereich (28) liegt,
**dadurch gekennzeichnet, dass**
- durch die Netzfrequenz relativ zur Nennfrequenz ermittelbar ist, ob das Energieversorgungsnetz (16) überversorgt ist oder überlastet ist, und mit der Netzfrequenz im zweiten Steuerbereich (34) ein überversorgtes und mit der Netzfrequenz im ersten Steuerbereich (28) ein überlastetes Energieversorgungsnetz (16) annehmbar ist; und
- die Leistungsübertragung bei Abweichungen der elektrischen Größe, die den ersten und/oder den zweiten Steuerbereich (28, 34) übersteigen, unterbrechbar ist, wobei die auf Basis der Netzfrequenz getroffene Entscheidung mit Hilfe einer gemessenen Netzspannung verifizierbar ist.

11. Vorrichtung nach Anspruch 10, wobei die Steuereinheit (22) dazu ausgebildet ist, die übertragene Leistung in dem Steuerbereich (28) mit zunehmender Abweichung der elektrischen Größe von der Nenngröße kontinuierlich abzusenken.

## Claims

1. Method (40) for transmitting electrical power between an energy supply grid (16) and an energy consumer (12) or energy generation unit (12) coupled to the energy supply grid (16), said method comprising the following steps:
- detecting at least one electrical variable of the energy supply grid (16),
- determining a discrepancy between the electrical variable and a rated variable of the energy supply grid (16) which is assigned to the electrical variable, and
- controlling the power transmission on the basis of the discrepancy, wherein the electrical variable is a line frequency of the energy supply grid (16) and the rated variable is a rated frequency of the energy supply grid (16), wherein a first control range (28) between a first and a second threshold value (24, 26) for the electrical variable is defined in which the power transmission is changed on the basis of the discrepancy of the electrical variable, wherein the rated variable is outside the first control range (28), and a second control range (34) between a third and a fourth threshold value (30, 32) for the electrical variable is defined in which the power transmission is changed on the basis of the electrical variable, wherein the rated variable is between the second control range (34) and the first control range (28),
**characterized in that**
- the line frequency relative to the rated frequency is used to ascertain whether the energy supply grid (16) is oversupplied or is overloaded, and the line frequency in the second control range (34) means that an oversupplied energy supply grid (16) is assumed and the line frequency in the first control range (28) means that an overloaded energy supply grid (16) is assumed; and
- the power transmission is interrupted in the event of discrepancies of the electrical variable that exceed the first and/or second control range (28, 34), the decision made on the basis of the line frequency being verified using a measured line voltage.

2. Method according to Claim 1, wherein the transmitted power in the control range (28) is decreased continuously as the discrepancy between the electrical variable and the rated variable increases.

3. Method according to Claim 1 or 2, wherein the transmitted power in the control range (28) is increased continuously as the discrepancy between the electrical variable and the rated variable decreases.

4. Method according to one of Claims 1 to 3, wherein the transmitted power in the second control range (34) is increased continuously as the discrepancy between the electrical variable and the rated variable increases.

5. Method according to one of Claims 1 to 4, wherein the transmitted power in the second control range (34) is decreased continuously as the discrepancy between the electrical variable and the rated variable decreases.

6. Method according to one of Claims 1 to 5, wherein the threshold values for the electrical variable (24, 26, 30, 32) are fixed on the basis of the rated variable.

7. Method according to one of Claims 1 to 6, wherein the rated variable is determined on the basis of the detected electrical variable.

8. Method according to one of Claims 1 to 7, wherein the power is transmitted from the energy supply grid (16) to the energy consumer (12), and wherein the first control range (28) is defined below the rated variable.

9. Method according to one of Claims 1 to 7, wherein the power is transmitted from the energy generation unit (12) to the energy supply grid (16), and wherein the first control range (28') is defined above the rated variable.

10. Apparatus (10) for transmitting electrical power between an energy supply grid (16) and an energy consumer (12) or energy generation unit (12) which is coupled to the energy supply grid (16), said apparatus comprising:
- a detection unit (18) for detecting at least one electrical variable of the energy supply grid (16),
- an evaluation unit (20) for determining a discrepancy between the electrical variable and a rated variable of the energy supply grid (16) assigned to the electrical variable, and
- a control unit (22), which is designed to control the power transmission on the basis of the discrepancy,
wherein the electrical variable is a line frequency of the energy supply grid (16) and the rated variable is a rated frequency of the energy supply grid (16), wherein a first control range (28) between a first and a second threshold value (24, 26) of the electrical variable is defined in which the power transmission is changed on the basis of the discrepancy of the electrical variable, wherein the rated variable is outside the first control range (28), and a second control range (34) between a third and a fourth threshold value (30, 32) for the electrical variable is defined in which the power transmission is changed on the basis of the electrical variable, wherein the rated variable is between the second control range (34) and the first control range (28),
**characterized in that**
- the line frequency relative to the rated frequency can be used to ascertain whether the energy supply grid (16) is oversupplied or is overloaded, and the line frequency in the second control range (34) means that an oversupplied energy supply grid (16) can be assumed and the line frequency in the first control range (28) means that an overloaded energy supply grid (16) can be assumed; and
- the power transmission can be interrupted in the event of discrepancies of the electrical variable that exceed the first and/or the second control range (28, 34), the decision made on the basis of the line frequency being able to be verified using a measured line voltage.

11. Apparatus according to Claim 10, wherein the control unit (22) is designed to decrease the transmitted power in the control range (28) continuously as the discrepancy between the electrical variable and the rated variable increases.

## Revendications

1. Procédé (40), destiné à transférer une puissance électrique entre un réseau d'alimentation en énergie (16) et un consommateur d'énergie (12) ou un générateur d'énergie (12) couplé au réseau d'alimentation en énergie (16), comportant les étapes consistant à :
- détecter au moins une dimension électrique du réseau d'alimentation en énergie (16),
- déterminer un écart entre la dimension électrique et une grandeur nominale du réseau d'alimentation en énergie (16) associée à la dimension électrique et
- commander le transfert de puissance sur la base de l'écart,
la grandeur électrique étant une fréquence de réseau du réseau d'alimentation en énergie (16) et la grandeur nominale étant une fréquence nominale du réseau d'alimentation en énergie (16), une première plage de commande (28) étant définie entre une première et une deuxième valeurs seuils (24, 26) de la dimension électrique, en ce qu'on fait varier le transfert de puissance sur la base de l'écart de la dimension électrique, la grandeur nominale se situant à l'extérieur de la première plage de commande (28) et une deuxième plage de commande (34) étant définie entre une troisième et une quatrième valeurs seuils (30, 32) de la dimension électrique, en ce qu'on fait varier le transfert de puissance sur la base de la dimension électrique, la grandeur nominale se situant entre la deuxième plage de commande (34) et la première plage de commande (28),
**caractérisé en ce**
- **qu'**il est déterminé à l'aide de la fréquence de réseau par rapport à la fréquence nominale si le réseau d'alimentation en énergie (16) est suralimenté ou surchargé, et un réseau d'alimentation en énergie (16) suralimenté à la fréquence de réseau dans la deuxième plage de commande (34) et surchargé à la fréquence de réseau dans la deuxième plage de commande (28) étant supposé ; et
- dans le cas d'écarts de la dimension électrique qui dépassent la première et/ou la deuxième plage de commande (28, 34), le transfert de puissance étant interrompu, la décision prise sur la base de la fréquence de réseau étant vérifiée à l'aide de la tension réseau mesurée.

2. Procédé selon la revendication 1, la puissance transférée dans la plage de commande (28) étant abaissée en continu au fur et à mesure de l'accroissement de l'écart entre la dimension électrique et la grandeur nominale.

3. Procédé selon la revendication 1 ou 2, la puissance transférée dans la plage de commande (28) étant augmentée en continu au fur et à mesure de la diminution de l'écart entre la dimension électrique et la grandeur nominale.

4. Procédé selon l'une quelconque des revendications 1 à 3, la puissance transférée dans la deuxième plage de commande (34) étant augmentée en continu au fur et à mesure de l'accroissement de l'écart entre la dimension électrique et la grandeur nominale.

5. Procédé selon l'une quelconque des revendications 1 à 4, la puissance transférée dans la deuxième plage de commande (34) étant abaissée en continu au fur et à mesure de la diminution de l'écart entre la dimension électrique et la grandeur nominale.

6. Procédé selon l'une quelconque des revendications 1 à 5, les valeurs seuils de la dimension électrique (24, 26, 30, 32) étant fixées sur la base de la grandeur nominale.

7. Procédé selon l'une quelconque des revendications 1 à 6, la grandeur nominale étant déterminée sur la base de la dimension électrique détectée.

8. Procédé selon l'une quelconque des revendications 1 à 7, la puissance étant transférée du réseau d'alimentation en énergie (16) vers le consommateur d'énergie (12) et la première plage de commande (28) étant définie en-dessous de la grandeur nominale.

9. Procédé selon l'une quelconque des revendications 1 à 7, la puissance étant transférée du générateur d'énergie (12) vers le réseau d'alimentation en énergie (16) et la première plage de commande (28') étant définie au-delà de la grandeur nominale.

10. Dispositif (10), destiné à transférer de la puissance électrique entre un réseau d'alimentation en énergie (16) et un consommateur d'énergie (12) ou générateur d'énergie (12) couplé avec le réseau d'alimentation en énergie (16), comportant :
- un module de détection (18), destiné à détecter au moins une dimension électrique du réseau d'alimentation en énergie (16),
- un module d'évaluation (20), destiné à déterminer un écart entre la dimension électrique et une grandeur nominale du réseau d'alimentation en énergie (16) associée à la dimension électrique et
- un module de commande (22), qui est conçu pour commander le transfert de puissance sur la base de l'écart,
la grandeur électrique étant une fréquence de réseau du réseau d'alimentation en énergie (16) et la grandeur nominale étant une fréquence nominale du réseau d'alimentation en énergie (16), une première plage de commande (28) étant définie entre une première et une deuxième valeurs seuils (24, 26) de la dimension électrique en ce qu'on fait varier le transfert de puissance sur la base de l'écart entre la dimension électrique, la grandeur nominale se situant à l'extérieur de la première plage de commande (28) et une deuxième plage de commande (34) étant définie entre une troisième et une quatrième valeurs seuils (30, 32) de la dimension électrique en ce qu'on fait varier le transfert de puissance sur la base de la dimension électrique,
la grandeur nominale se situant entre la deuxième plage de commande (34) et la première plage de commande (28),
**caractérisé en ce que**
- par la fréquence de réseau en rapport à la fréquence nominale il peut être déterminé si le réseau d'alimentation en énergie (16) est suralimenté ou surchargé, et à l'aide de la fréquence de réseau dans la deuxième plage de commande (34), il peut être supposé un réseau d'alimentation en énergie (16) suralimenté et surchargé par la fréquence de réseau dans la première plage de commande (28) et
- dans le cas d'écarts dans la dimension électrique, qui dépassent la première et/ou la deuxième plage de commande (28, 34), le transfert de puissance peut être interrompu, la décision prise sur la base de la fréquence de réseau étant vérifiable à l'aide d'une tension réseau mesurée.

11. Dispositif selon la revendication 10, le module de commande (22) étant conçu pour abaisser en continu la puissance transférée dans la plage de commande (28) au fur et à mesure de l'accroissement entre la dimension électrique et la grandeur nominale.
